# EUROPEAN PATENT APPLICATION

(11) **EP 4 683 209 A1**
(43) Date of publication of application: **21.01.2026**
(21) Application number: 23928496.1
(22) Date of filing: 17.03.2023
(51) Int. Cl.: H02P 23/14

(54) **CONTROL DEVICE FOR ROTARY MACHINE**

(71) Applicant: MITSUBISHI ELECTRIC CORPORATION, Chiyoda-ku Tokyo 100-8310 (JP)
(72) Inventor: KONDO, Shota, Tokyo 100-8310 (JP); FURUKAWA, Akira, Tokyo 100-8310 (JP)
(74) Representative: Hoffmann Eitle
(86) International application number: PCT/JP2023/010533
(87) International publication number: WO 2024/194911

(57) **Abstract**

Provided is a control device for a rotary machine that can perform stable current control while suppressing saturation of a voltage command for stator windings. The control device includes: a current command generation unit (81) which generates a field winding current command and a stator winding current command on the basis of operation commands; a field winding voltage command unit; and a stator winding voltage command unit. The current command generation unit includes a field winding current command generation unit (810) which generates the field winding current command on the basis of operation commands and DC voltage, a stator winding current command correction unit (811) which generates state variables on the basis of current flowing through a field winding and the field winding current command, and a stator winding current command generation unit (812) which generates the stator winding current command on the basis of operation commands and state variables.

## Description

### TECHNICAL FIELD

The present disclosure relates to a control device for a rotary machine.

### BACKGROUND ART

A control device for a rotary machine having a field winding and a stator winding generates current commands for currents flowing through the field winding and the stator winding, in accordance with operation commands for torque, a rotational speed, and the like of the rotary machine, which are inputted from the outside. The control device for the rotary machine performs control so that currents flowing through the field winding and the stator winding follow the current commands. In general, the impedance of the field winding is greater than the impedance of the stator winding, and thus it is known that response of the current flowing through the field winding is slower than response of the current flowing through the stator winding. Therefore, in order to appropriately control the rotary machine, the conventional control device for the rotary machine performs control while taking into consideration the fact that current response of the field winding is slower than current response of the stator winding.

In one conventional control method for a rotary machine, a current command for a stator winding is calculated on the basis of variation in torque caused by variation in delay of current response of a field winding (see, for example, Patent Document 1). In another control method, response delay of current of a field winding with respect to a current command is simulated, and a current command for a stator winding is calculated on the basis of the simulated response delay (see, for example, Patent Document 2).

### CITATION LIST

### PATENT DOCUMENT

Patent Document 1: Japanese Laid-Open Patent Publication No. 2022-83905
Patent Document 2: WO2020/217438

### SUMMARY OF THE INVENTION

### PROBLEM TO BE SOLVED BY THE INVENTION

However, in such conventional control methods for a rotary machine, in a case where delay of current response of the field winding is slower than assumed, or in a case where current actually flowing through a stator winding cannot follow a current command for the stator winding because of variation in specifications, the amplitude of the current command for the stator winding might become greater than assumed. In this case, if the amplitude of the current command for the stator winding exceeds an upper limit value of voltage that the control device can output, a voltage command might be saturated. If the voltage command is saturated, windup of integral control in the control device, magnetic flux interference between the stator winding and the field winding in the rotary machine, and the like are caused. As a result, current control for the rotary machine becomes unstable.

The present disclosure has been made to solve the above problem, and an object of the present disclosure is to provide a control device for a rotary machine that can perform stable current control while suppressing saturation of a voltage command for a stator winding, even in a case where the amplitude of a current command for the stator winding might become greater than assumed.

### MEANS TO SOLVE THE PROBLEM

A control device for a rotary machine according to the present disclosure is a control device for a rotary machine including a rotor having a field winding and a stator having a stator winding, the control device including: a current command generation unit which generates a field winding current command for current flowing through the field winding and a stator winding current command for current flowing through the stator, on the basis of an operation command inputted from outside; a field winding voltage command unit which generates a field winding voltage command for voltage to be applied to the field winding, on the basis of the field winding current command; a stator winding voltage command unit which generates a stator winding voltage command for voltage to be applied to the stator winding, on the basis of the stator winding current command; a field winding power conversion unit which applies voltage to the field winding on the basis of the field winding voltage command; and a stator winding power conversion unit which applies voltage to the stator winding on the basis of the stator winding voltage command. The current command generation unit includes: a field winding current command generation unit which generates the field winding current command on the basis of the operation command and DC voltage inputted from outside; a stator winding current command correction unit which generates a state variable for correcting the stator winding current command, on the basis of the current flowing through the field winding and the field winding current command generated by the field winding current command generation unit; and a stator winding current command generation unit which generates the stator winding current command on the basis of the operation command and the state variable generated by the stator winding current command correction unit.

### EFFECT OF THE INVENTION

In the control device for the rotary machine according to the present disclosure, the current command generation unit includes: the field winding current command generation unit which generates the field winding current command on the basis of the operation command and the DC voltage inputted from outside; the stator winding current command correction unit which generates the state variable for correcting the stator winding current command, on the basis of the current flowing through the field winding and the field winding current command generated by the field winding current command generation unit; and the stator winding current command generation unit which generates the stator winding current command on the basis of the operation command and the state variable generated by the stator winding current command correction unit. Thus, it is possible to perform stable current control while suppressing saturation of the voltage command for the stator winding.

### BRIEF DESCRIPTION OF THE DRAWINGS

[FIG. 1] FIG. 1 is a configuration diagram of a control device for a rotary machine according to embodiment 1.
[FIG. 2] FIG. 2 is a configuration diagram of a stator winding power conversion unit according to embodiment 1.
[FIG. 3] FIG. 3 is a configuration diagram of a field winding power conversion unit according to embodiment 1.
[FIG. 4] FIG. 4 is a configuration diagram of a field winding power conversion unit according to embodiment 1.
[FIG. 5] FIG. 5 is a configuration diagram showing a function of a processor according to embodiment 1.
[FIG. 6] FIG. 6 is a configuration diagram showing a function of a current command generation unit according to embodiment 1.
[FIG. 7] FIG. 7 is a configuration diagram showing a function of a stator winding current command correction unit according to embodiment 1.
[FIG. 8] FIG. 8 shows a final field winding current command outputted from a field winding current command selection unit according to embodiment 1.
[FIG. 9] FIG. 9 shows a DC voltage value outputted from a DC voltage correction unit according to embodiment 1.
[FIG. 10] FIG. 10 illustrates operation with respect to a stator winding voltage margin in embodiment 1.
[FIG. 11] FIG. 11 shows characteristics of a control device for a rotary machine in a comparative example with respect to embodiment 1.
[FIG. 12] FIG. 12 shows characteristics of the control device for the rotary machine according to embodiment 1.
[FIG. 13] FIG. 13 shows characteristics of the control device for the rotary machine according to embodiment 1.

### DESCRIPTION OF EMBODIMENTS

Hereinafter, a control device for a rotary machine according to embodiments for carrying out the present disclosure will be described in detail with reference to the drawings. In the drawings, the same reference characters denote the same or corresponding parts.

### Embodiment 1

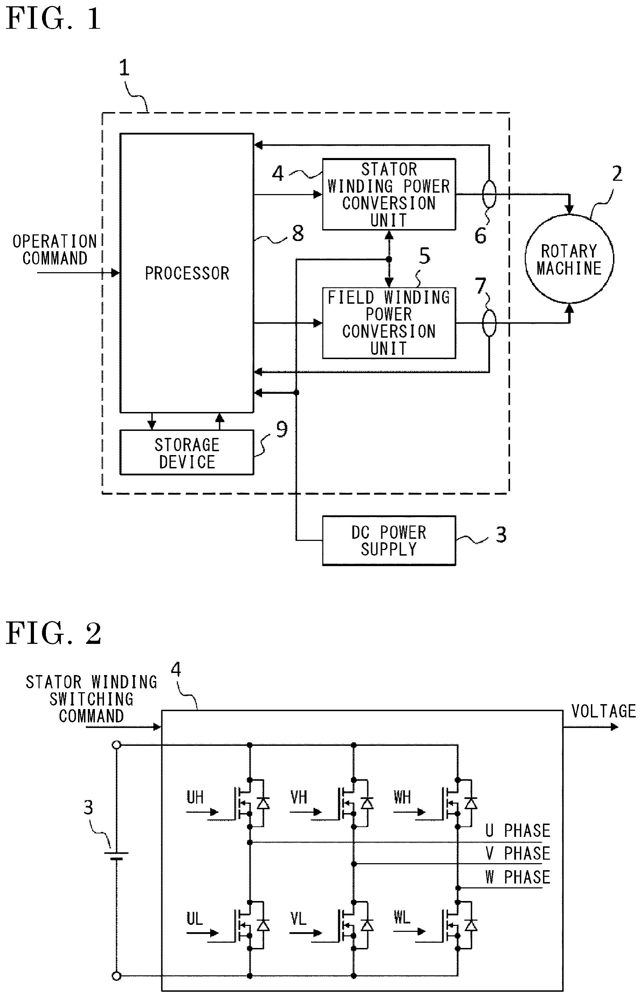

FIG. 1 is a configuration diagram of a control device for a rotary machine according to embodiment 1. A control device 1 for a rotary machine according to the present embodiment controls a rotary machine 2. The control device 1 is driven by DC voltage of an external DC power supply 3. The control device 1 includes a stator winding power conversion unit 4, a field winding power conversion unit 5, a stator winding current detection unit 6 which detects current flowing through a stator winding, a field winding current detection unit 7 which detects current flowing through a field winding, a processor 8, and a storage device 9. The control device 1 for the rotary machine according to the present embodiment controls the rotary machine 2 on the basis of operation commands inputted from a host device. The operation commands inputted from the host device are, for example, a torque command and a rotational speed command for respectively determining torque and a rotational speed of the rotary machine 2, and the like.

The rotary machine 2 includes a rotor having a permanent magnet and the field winding, and a stator having one set of stator windings for three phases, i.e., U phase, V phase, and W phase. The rotor may not necessarily have a permanent magnet. The stator windings are not limited to a configuration of having one set of three phases, and a configuration of having one or more sets of three or more phases may be adopted.

The stator winding power conversion unit 4 converts DC voltage of the DC power supply 3 to AC voltage, and applies AC voltage to the stator windings. The field winding power conversion unit 5 converts DC voltage of the DC power supply 3 to DC voltage having a different amplitude, and applies the DC voltage as field winding voltage V_{f} to the field winding. The stator winding current detection unit 6 detects currents flowing through the stator windings for U phase, V phase, and W phase of the rotary machine 2. The field winding current detection unit 7 detects current flowing through the field winding of the rotary machine 2.

FIG. 2 is a configuration diagram of the stator winding power conversion unit according to the present embodiment. FIG. 2 shows an example of the stator winding power conversion unit 4 in the present embodiment. As shown in FIG. 2, the stator winding power conversion unit 4 in the present embodiment is a three-phase full-bridge inverter composed of six switching elements and six diodes. The configuration of the stator winding power conversion unit 4 is a configuration for a case where the rotary machine has one set of stator windings for three phases, i.e., U phase, V phase, and W phase. Each switching element is formed of a MOS-FET (metal oxide semiconductor-field effect transistor), an IGBT (insulated gate bipolar transistor), or the like. The stator winding power conversion unit 4 applies AC voltages to the stator windings for U phase, V phase, and W phase of the rotary machine 2 in accordance with a stator winding switching command inputted from the processor 8. Specifically, the stator winding power conversion unit 4 applies AC voltages according to switching commands UH and UL for U phase, switching commands VH and VL for V phase, and switching commands WH and WL for W phase from the processor 8, to the stator windings for U phase, V phase, and W phase of the rotary machine 2. The stator winding power conversion unit 4 is not limited to an inverter, and may be a converter. The configuration of the inverter of the stator winding power conversion unit 4 may be any configuration having one or more sets of three or more phases in accordance with the number of phases of the stator windings of the rotary machine 2.

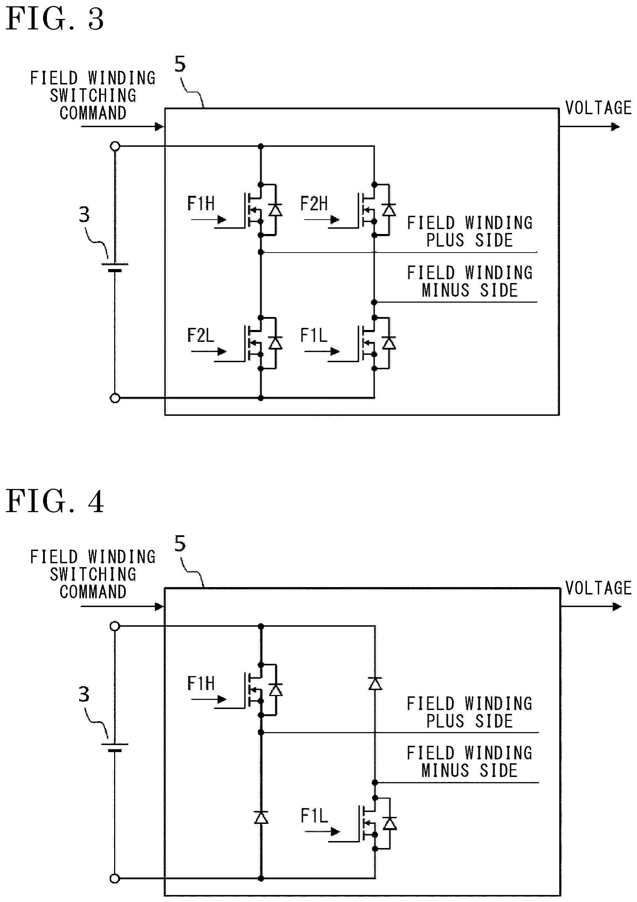

FIG. 3 is a configuration diagram of the field winding power conversion unit according to the present embodiment. FIG. 3 shows an example of the field winding power conversion unit 5 in the present embodiment. As shown in FIG. 3, the field winding power conversion unit 5 in the present embodiment is a two-phase full-bridge converter composed of four switching elements and four diodes. Each switching element is formed of a MOS-FET, an IGBT, or the like. The field winding power conversion unit 5 applies DC voltage to the field winding of the rotary machine 2 in accordance with a field winding switching command inputted from the processor 8. Specifically, the field winding power conversion unit 5 converts DC voltage inputted from the DC power supply 3 to DC voltage having a different amplitude in accordance with switching commands F1H, F1L, F2H, F2L for the field winding from the processor 8, and applies the converted DC voltage to the field winding of the rotary machine 2. For example, in a case where a torque command inputted to the processor 8 is a command for increasing an amplitude, the field winding power conversion unit 5 controls application voltage so that current of the field winding increases in the positive direction. Conversely, in a case where a torque command inputted to the processor 8 is a command for decreasing an amplitude, the field winding power conversion unit 5 controls application voltage so that current of the field winding increases in the negative direction.

FIG. 4 is a configuration diagram of the field winding power conversion unit according to the present embodiment. FIG. 4 shows another example of the field winding power conversion unit 5 in the present embodiment. As shown in FIG. 4, the field winding power conversion unit 5 is configured such that, in the field winding power conversion unit shown in FIG. 3, the switching elements for applying voltage in the negative direction to the field winding are replaced with diodes. Therefore, this field winding power conversion unit 5 is reduced in cost as compared to the field winding power conversion unit shown in FIG. 3. However, this field winding power conversion unit 5 cannot apply voltage in the negative direction to the field winding. Therefore, in a case where a torque command is to decrease an amplitude, current response of the field winding greatly depends on a time constant of a resistance and an inductance of the field winding, and thus the current response of the field winding is extremely slow as compared to current response of the stator winding.

The stator winding current detection unit 6 and the field winding current detection unit 7 are, for example, current sensors of a resistance detection type, a magnetic field detection type, or the like. The stator winding current detection unit 6 detects stator winding currents I_{U}, I_{V}, I_{W} flowing through the stator windings for U phase, V phase, and W phase of the rotary machine 2. The field winding current detection unit 7 detects field winding current I_{f} flowing through the field winding of the rotary machine 2.

The processor 8 is, for example, a CPU (Central Processing Unit), and executes a program read from the storage device 9, to implement various functions. The program to be executed by the processor 8 is stored in the storage device 9. The storage device 9 includes a volatile storage device such as a random access memory and an auxiliary storage device such as a flash memory. When the processor 8 reads the program from the storage device 9, the processor 8 reads the program stored in the auxiliary storage device via the volatile storage device. The processor 8 may output data such as a calculation result to the volatile storage device of the storage device 9, or may store such data into the auxiliary storage device via the volatile storage device.

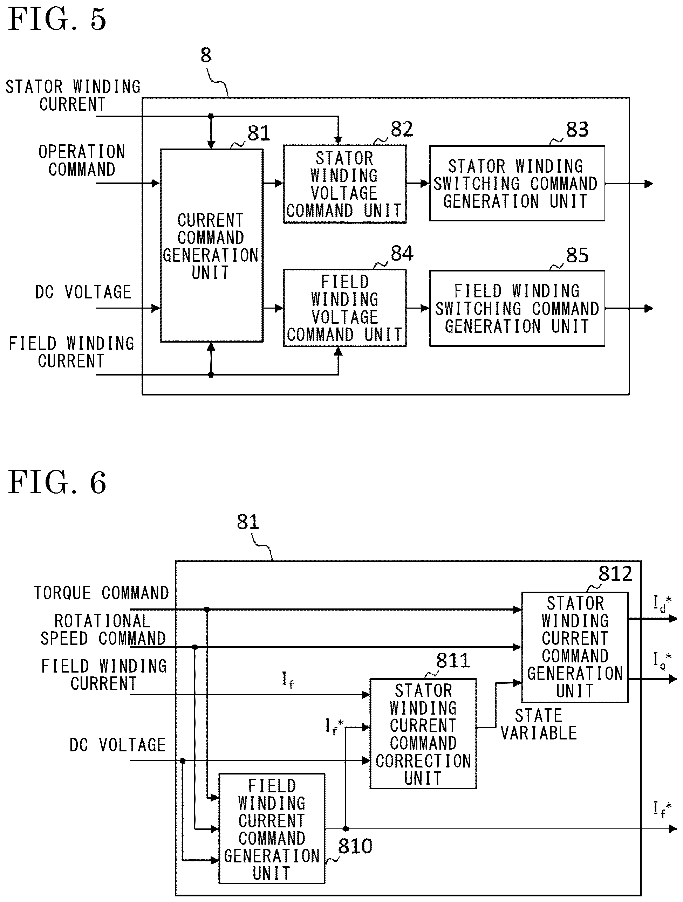

FIG. 5 is a configuration diagram showing a function of the processor. As shown in FIG. 5, the processor 8 includes a current command generation unit 81, a stator winding voltage command unit 82, a stator winding switching command generation unit 83, a field winding voltage command unit 84, and a field winding switching command generation unit 85.

The current command generation unit 81 receives operation commands such as a torque command and a rotational speed command, DC voltage of the DC power supply 3, the stator winding currents I_{U}, I_{V}, I_{W} detected by the stator winding current detection unit 6, and the field winding current I_{f} detected by the field winding current detection unit 7. The current command generation unit 81 generates stator winding current commands I_{d}*, I_{q}* and a field winding current command I_{f}* on the basis of the above inputs. Here, a d axis is a center axis of a magnetic pole formed by the permanent magnet and the field winding of the rotor, and a q axis is an axis orthogonal to the d axis. Hereinafter, indices d and q attached to notations of current and voltage mean the d axis and the q axis, respectively.

On the basis of the stator winding current commands I_{d}*, I_{q}* generated by the current command generation unit 81 and the stator winding currents I_{U}, I_{V}, I_{W} detected by the stator winding current detection unit 6, the stator winding voltage command unit 82 generates stator winding voltage commands so that stator winding currents follow the stator winding current commands. At this time, the stator winding voltage command unit 82 performs coordinate conversion of the stator winding currents I_{U}, I_{V}, I_{W} to I_{d}, I_{q} on the basis of rotor position information of the rotary machine 2, and then calculates voltage commands V_{d}*, V_{q}* using decoupling control and PI (Proportional-Integral) control so that I_{d} and I_{q} follow I_{d}* and I_{q}*. Further, the stator winding voltage command unit 82 converts V_{d}* and V_{q}* through coordinate conversion to stator winding voltage commands V_{U}*, V_{V}*, V_{W}*. The rotor position information of the rotary machine 2 can be detected by means such as a resolver or an encoder attached to the rotary machine 2, although not shown. Alternatively, rotor position information estimated by a rotor position estimator may be used as the rotor position information of the rotary machine 2.

In a case where voltage amplitudes of the stator winding voltage commands V_{U}*, V_{V}*, V_{W}* calculated by the stator winding voltage command unit 82 exceed a voltage amplitude that the stator winding power conversion unit 4 can output, the stator winding voltage command unit 82 limits the voltage amplitudes as described later, and outputs V_{U}*, V_{V}*, V_{W}* having the limited voltage amplitudes to the stator winding switching command generation unit 83. Hereinafter, a case where voltage amplitudes of the stator winding voltage commands exceed the voltage amplitude that the stator winding power conversion unit 4 can output is referred to as voltage saturation.

Although depending on the performances of the rotary machine, the control device, and the DC power supply, wirings thereof, and the like, voltage saturation is less likely to occur in a control region in which the rotational speed of the rotary machine is smaller than 20% of the maximum rotational speed. However, as the rotational speed of the rotary machine increases, induced voltage becomes higher, so that voltage saturation becomes more likely to occur. When voltage saturation has occurred, windup of integral control in the control device and the like occur, so that current control for the rotary machine becomes unstable and response becomes slow or oscillates. Therefore, it is desirable that the stator winding voltage commands V_{U}*, V_{V}*, V_{W}* are set so as not to cause voltage saturation if possible. Here, windup of integral control refers to a phenomenon in which, in a case where there is a great deviation between a target value and the present value when integral control is started, if voltage saturation has occurred, the present value cannot approach the target value and an integral value becomes excessive, resulting in overshoot.

However, in a case where, due to variation in the specifications of the rotary machine and the like, an inductance and a magnetic flux generated in the rotary machine are different from those assumed, voltage saturation can occur accidentally. When voltage saturation has occurred, it is desired that control (hereinafter, referred to as flux weakening control) for correcting the stator winding current commands I_{d}*, I_{q}* and the field winding current command I_{f}* so as to reduce the voltage amplitudes is incorporated.

The method for performing control so that I_{d} and I_{q} follow I_{d}* and I_{q}* in the stator winding voltage command unit 82 is not limited to PI control. Control performed by the stator winding voltage command unit 82 may be control in which one or more of P (proportional) control, I (integral) control, and D (derivative) control are combined, for example. Control performed by the stator winding voltage command unit 82 is not limited to feedback control such as PI control and may be feedforward control. In a case of employing decoupling control, feedforward control, or the like as control performed in the stator winding voltage command unit 82, rotational speed information needed for voltage calculation can be calculated from rotor position information.

The stator winding switching command generation unit 83 compares the stator winding voltage commands V_{U}*, V_{V}*, V_{W}* calculated by the stator winding voltage command unit 82 with a carrier wave, to generate the switching commands UH and UL for U phase, the switching commands VH and VL for V phase, and the switching commands WH and WL for W phase. The stator winding switching command generation unit 83 outputs the generated switching commands to the stator winding power conversion unit 4. In general, a triangular wave is used as the carrier wave, but the carrier wave may not necessarily be a triangular wave. The stator winding switching command generation unit 83 may generate the switching commands without comparison with a carrier wave.

On the basis of the field winding current command I_{f}* generated by the current command generation unit 81 and the field winding current I_{f} detected by the field winding current detection unit 7, the field winding voltage command unit 84 generates a field winding voltage command so that the field winding current follows the field winding current command. At this time, the field winding voltage command unit 84 calculates the field winding voltage command V_{f}* using PI control so that the field winding current I_{f} follows the field winding current command I_{f}*.

In a case where the voltage amplitude of the field winding voltage command V_{f}* calculated by the field winding voltage command unit 84 exceeds a voltage amplitude that the field winding power conversion unit 5 can output, the field winding voltage command unit 84 limits the voltage amplitude and outputs V_{f}* having the limited voltage amplitude to the field winding switching command generation unit 85. As in the case of the stator winding voltage command, a case where the voltage amplitude of the field winding voltage command exceeds the voltage amplitude that the field winding power conversion unit 5 can output is referred to as voltage saturation. As with the stator winding voltage command, it is desirable that the field winding voltage command V_{f}* is set so as not to cause voltage saturation if possible.

The method for performing control so that I_{f} follows I_{f}* in the field winding voltage command unit 84 is not limited to PI control. Control performed by the field winding voltage command unit 84 may be control in which one or more of P control, I control, and D control are combined, for example. Control performed by the field winding voltage command unit 84 is not limited to feedback control such as PI control and may be feedforward control.

The field winding switching command generation unit 85 compares the field winding voltage command V_{f}* calculated by the field winding voltage command unit 84 with a carrier wave, to generate a field winding switching command. In a case where the field winding power conversion unit 5 has the configuration shown in FIG. 3, the field winding switching command generation unit 85 generates the field winding switching commands F1H, F1L and F2H, F2L. In a case where the field winding power conversion unit 5 has the configuration shown in FIG. 4, the field winding switching command generation unit 85 generates the switching commands F1H, F1L. Then, the field winding switching command generation unit 85 outputs the generated switching commands to the field winding power conversion unit 5. In general, a triangular wave is used as the carrier wave, but the carrier wave may not necessarily be a triangular wave. The field winding switching command generation unit 85 may generate the switching commands without comparison with a carrier wave.

FIG. 6 is a configuration diagram showing the function of the current command generation unit. As shown in FIG. 6, the current command generation unit 81 includes a field winding current command generation unit 810, a stator winding current command correction unit 811, and a stator winding current command generation unit 812.

The field winding current command generation unit 810 receives DC voltage, and the torque command and the rotational speed command which are operation commands. The field winding current command generation unit 810 has a lookup table having combinations of a torque command, a rotational speed command, DC voltage, and a field winding current command. On the basis of the lookup table, the field winding current command generation unit 810 generates the field winding current command I_{f}* from the received operation commands and DC voltage. The lookup table is determined by a power factor, an output, loss, and the like of the rotary machine. In a case of a usage method in which DC voltage does not change, DC voltage need not be inputted. The field winding current command generation unit 810 may not necessarily use a lookup table to generate the field winding current command. The field winding current command generation unit 810 may generate a field winding current command on the basis of a relational equation among a torque command, a rotational speed command, DC voltage, and a field winding current command.

The stator winding current command correction unit 811 receives the field winding current I_{f}, the field winding current command I_{f}* generated by the field winding current command generation unit 810, and DC voltage. The stator winding current command correction unit 811 generates a state variable described later, on the basis of the field winding current I_{f}, the field winding current command I_{f}*, and DC voltage, and outputs the state variable to the stator winding current command generation unit 812.

The stator winding current command generation unit 812 receives the state variable, and the torque command and the rotational speed command which are operation commands. The stator winding current command generation unit 812 has a map or a function representing the relationship among the operation command, the state variable, and the stator winding current commands I_{d}*, I_{q}*. On the basis of the map or the function, the stator winding current command generation unit 812 generates the stator winding current commands I_{d}*, I_{q}* from the received operation command and state variable. For example, the stator winding current command generation unit 812 generates the stator winding current commands I_{d}*, I_{q}* so that the power factor, output, torque, current response followability, and the like of the rotary machine become a maximum value, a minimum value, or a value therebetween.

In the rotary machine, as the rotational speed increases, induced voltage increases. Therefore, the stator winding current command generation unit 812 needs to have such a map or a function that implements flux weakening control so that the amplitude of the stator winding voltage command does not exceed the upper limit value of voltage that the stator winding power conversion unit 4 can output, in accordance with the rotational speed. As the flux weakening control, for example, control in which a d-axis magnetic flux and a q-axis magnetic flux are weakened, and in particular, control in which a d-axis magnetic flux is decreased, are generally used.

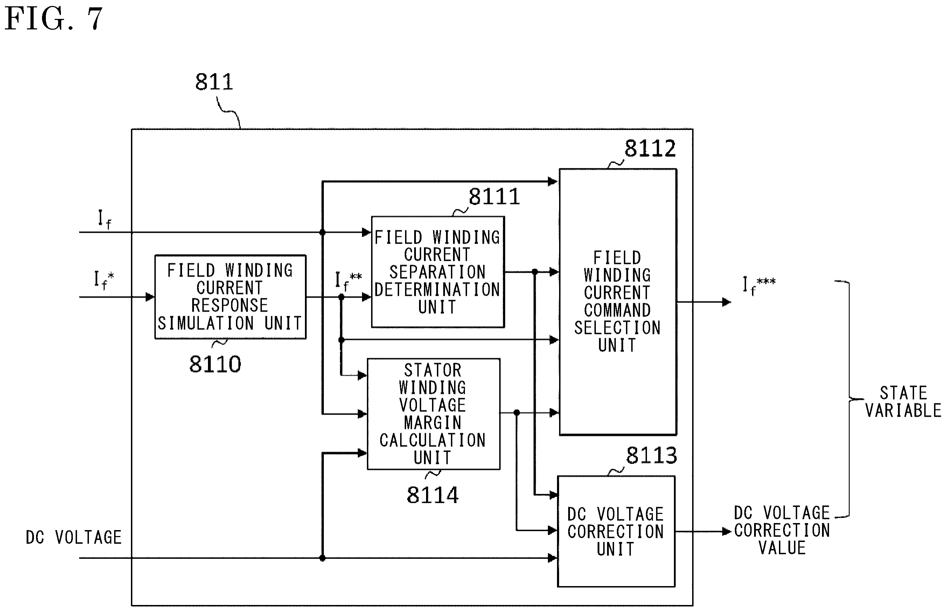

FIG. 7 is a configuration diagram showing the function of the stator winding current command correction unit. As shown in FIG. 7, the stator winding current command correction unit 811 includes a field winding current response simulation unit 8110, a field winding current separation determination unit 8111, a field winding current command selection unit 8112, a DC voltage correction unit 8113, and a stator winding voltage margin calculation unit 8114.

The field winding current response simulation unit 8110 receives the field winding current command I_{f}* generated by the field winding current command generation unit 810. The field winding current response simulation unit 8110 has a LPF (low pass filter), a state equation, a map, a function, and the like for simulating response of current flowing through the field winding. On the basis of the LPF, the state equation, and the like, the field winding current response simulation unit 8110 generates a field winding current command I_{f}** simulating response of current flowing through the field winding, from the received field winding current command I_{f}*. Here, current flowing through the field winding on the basis of the field winding current command I_{f}** simulating response of current flowing through the field winding is referred to as field winding response current.

In a case where the stator winding current command correction unit 811 includes the field winding current response simulation unit 8110 when generating the stator winding current command on the basis of the field winding current command, the stator winding current command can be generated at a value closer to response of current flowing through the field winding, as compared to a case of not including the field winding current response simulation unit 8110. Thus, the control device for the rotary machine according to the present embodiment provides an effect of improving transient efficiency change, torque response, and the like of the rotary machine. However, the stator winding current command correction unit 811 in the present embodiment may not necessarily include the field winding current response simulation unit 8110.

The field winding current separation determination unit 8111 receives the field winding current I_{f}, and the field winding current command I_{f}** which is generated by the field winding current response simulation unit 8110 and simulates response of current. The field winding current separation determination unit 8111 determines the magnitude of separation between I_{f} and I_{f}**. Here, the field winding current separation determination unit 8111 outputs the determined magnitude of separation to the field winding current command selection unit 8112 and the DC voltage correction unit 8113.

The field winding current command selection unit 8112 receives the field winding current I_{f}, the field winding current command I_{f}** which is generated by the field winding current response simulation unit 8110 and simulates response of current, and the magnitude of separation between I_{f} and I_{f}** determined by the field winding current separation determination unit 8111. On the basis of the magnitude of separation between I_{f} and I_{f}**, the field winding current command selection unit 8112 outputs a final field winding current command I_{f}*** for stator winding current command generation. As described later, the field winding current command selection unit 8112 also receives a stator winding voltage margin calculated by the stator winding voltage margin calculation unit 8114.

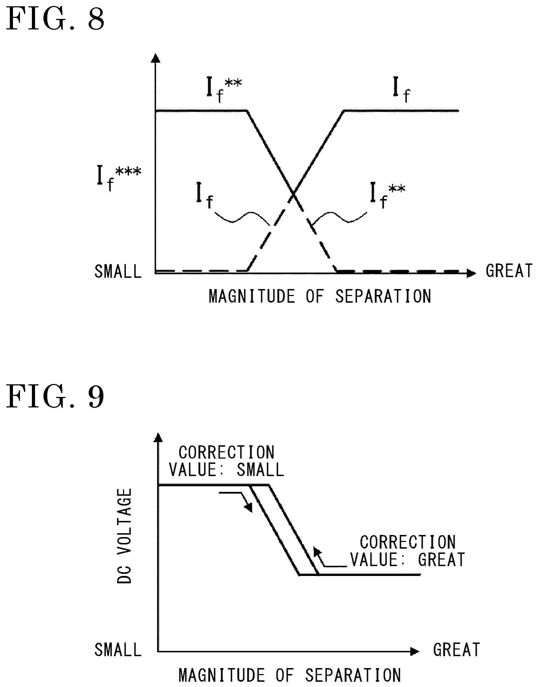

FIG. 8 shows the final field winding current command outputted from the field winding current command selection unit. In FIG. 8, the horizontal axis indicates the magnitude of separation between I_{f} and I_{f}**, and the vertical axis indicates the final field winding current command I_{f}*** outputted from the field winding current command selection unit 8112. As shown in FIG. 8, when the separation between I_{f} and I_{f}** is small, the field winding current command selection unit 8112 outputs I_{f}** as the final field winding current command, and when the separation between I_{f} and I_{f}** is great, the field winding current command selection unit 8112 outputs I_{f} as the final field winding current command. When the separation between I_{f} and I_{f}** is middle, the field winding current command selection unit 8112 outputs a weighted average value between I_{f} and I_{f}** according to the separation, as the final field winding current command.

In the control device for the rotary machine configured as described above, in a steady state, the stator winding current command can be generated so as not to be influenced by harmonic current of I_{f} detected by the field winding current detection unit, and in a transient state, the stator winding current command according to current I_{f} actually flowing through the field winding can be generated. Therefore, not only transient efficiency change and torque response of the rotary machine can be improved, but also the stator winding current commands I_{d}*, I_{q}* can be appropriately generated even in a case where there is separation between I_{f} and I_{f}**.

The separation between I_{f} and I_{f}** is due to error and variation regarding characteristic values assumed in the control device and electrical and mechanical specifications of the rotary machine, for example. Therefore, it is impossible to perfectly eliminate separation between I_{f} and I_{f}**. In a case where the configuration of the field winding power conversion unit is simplified as in the configuration shown in FIG. 4, the separation between I_{f} and I_{f}** further increases.

The DC voltage correction unit 8113 receives DC voltage and the magnitude of separation between I_{f} and I_{f}** determined by the field winding current separation determination unit 8111. The DC voltage correction unit 8113 corrects DC voltage on the basis of the received magnitude of separation between I_{f} and I_{f}**, and outputs the corrected DC voltage value. As described later, the DC voltage correction unit 8113 also receives the stator winding voltage margin calculated by the stator winding voltage margin calculation unit 8114.

FIG. 9 shows a DC voltage value outputted from the DC voltage correction unit 8113. In FIG. 9, the horizontal axis indicates the magnitude of separation between I_{f} and I_{f}**, and the vertical axis indicates the corrected DC voltage value outputted from the DC voltage correction unit 8113. As shown in FIG. 9, when the separation between I_{f} and I_{f}** is small, the DC voltage correction unit 8113 does not correct the DC voltage of the DC power supply 3 or corrects the DC voltage by a reduced correction amount, and when the separation between I_{f} and I_{f}** is great, the DC voltage correction unit 8113 corrects the DC voltage of the DC power supply 3 to a smaller value. As shown in FIG. 9, it is preferable that determination for whether to increase or decrease the correction value with respect to the magnitude of separation is imparted with a hysteresis characteristic for preventing chattering due to pulsation of the magnitude of separation.

As described above, in a case where the amplitude of I_{f} is greater in the positive direction than the amplitude of I_{f}**, it is likely that the amplitude of the voltage command for the stator winding exceeds the upper limit value of voltage that the stator winding power conversion unit can output and thus voltage saturation occurs. In the control device for the rotary machine configured as described above, the stator winding current command can be generated so that the voltage amplitude has a margin from the upper limit value of voltage that the stator winding power conversion unit can output. Thus, it is possible to assuredly suppress transient voltage saturation with fast response.

The stator winding voltage margin calculation unit 8114 receives the field winding current I_{f}, the field winding current command I_{f}** which is generated by the field winding current response simulation unit 8110 and simulates response of current, and DC voltage. The stator winding voltage margin calculation unit 8114 has a map or a function representing the relationship among the field winding current I_{f}, the field winding current command I_{f}** simulating response of current, DC voltage, and the stator winding voltage margin. Here, the stator winding voltage margin is a difference between the amplitude of the stator winding voltage command calculated from I_{f} and I_{f}** and the upper limit of the voltage amplitude that the stator winding power conversion unit 4 can output. On the basis of the map or the function, the stator winding voltage margin calculation unit 8114 calculates the stator winding voltage margin from the received field winding current I_{f} and the received field winding current command I_{f}** simulating response of current. Then, the stator winding voltage margin calculation unit 8114 outputs the calculated stator winding voltage margin to the field winding current command selection unit 8112 and the DC voltage correction unit 8113.

The stator winding voltage margin calculation unit 8114 may calculate the stator winding voltage margin on the basis of the torque command and the rotational speed command which are operation commands, the stator winding voltage command, DC voltage, and the like.

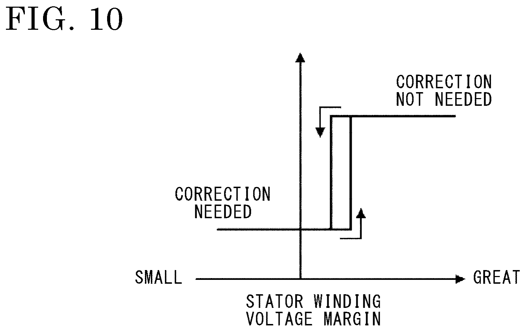

FIG. 10 illustrates operation with respect to the stator winding voltage margin. As shown in FIG. 10, in a case where the stator winding voltage margin is great, it is determined that correction in the field winding current command selection unit 8112 and the DC voltage correction unit 8113 is not needed. In a case where the stator winding voltage margin is small, correction in the field winding current command selection unit 8112 and the DC voltage correction unit 8113 is needed. As shown in FIG. 10, it is preferable that determination for whether or not correction is needed with respect to the stator winding voltage margin is imparted with a hysteresis characteristic for preventing chattering. Here, correction in the field winding current command selection unit 8112 means selecting I_{f}** or a weighted average value between I_{f} and I_{f}** as the final field winding current command I_{f}***, instead of selecting I_{f}. Correction in the DC voltage correction unit 8113 means correcting DC voltage on the basis of the magnitude of separation between I_{f} and I_{f}**.

Determination for whether or not correction shown in FIG. 10 is needed may be performed in the stator winding voltage margin calculation unit 8114, or may be performed in each of the field winding current command selection unit 8112 and the DC voltage correction unit 8113.

By the stator winding voltage margin calculation unit 8114 operating as described above, it is possible to perform operation so as not to unnecessarily exert flux weakening control in a low rotational speed region in which the stator winding voltage has a margin. Basically, the field winding current separation determination unit 8111 and the stator winding voltage margin calculation unit 8114 are provided as one set including these two. However, in a case where only one of them can be provided due to constraints in program capacity, only one of them may be provided as an alternative configuration using the fact that separation of the field winding current and the stator winding voltage margin are correlated with each other.

The stator winding current command correction unit 811 sends, as state variables, the final field winding current command I_{f}*** outputted from the field winding current command selection unit 8112 and the corrected value of DC voltage outputted from the DC voltage correction unit 8113, to the stator winding current command generation unit 812. That is, the state variables include at least one of information about current flowing through the field winding and information about DC voltage of the DC power supply 3. Here, information about current flowing through the field winding is the final field winding current command I_{f}*** and is at least one of the value of current flowing through the field winding, the field winding current command, and the field winding response current simulating response of current flowing through the field winding, or information obtained by combining at least two of these.

Voltage saturation is less likely to occur in a control region in which the rotational speed of the rotary machine is smaller than 20% of the maximum rotational speed. Therefore, in the control device for the rotary machine according to the present embodiment, the stator winding current command correction unit may be set so as to operate in a case where the rotational speed of the rotary machine is not smaller than 20% of the maximum rotational speed.

Next, operation of the control device for the rotary machine according to the present embodiment will be described.

In the control device for the rotary machine according to the present embodiment, behaviors of the stator winding current, the field winding current, and the amplitude of the stator winding voltage command in a case where the torque command is changed to 0 from a predetermined value (hereinafter, referred to as a prescribed value) greater than 0, will be described. First, behaviors in a control device for a rotary machine in a comparative example in which the stator winding current command correction unit is not provided, will be described.

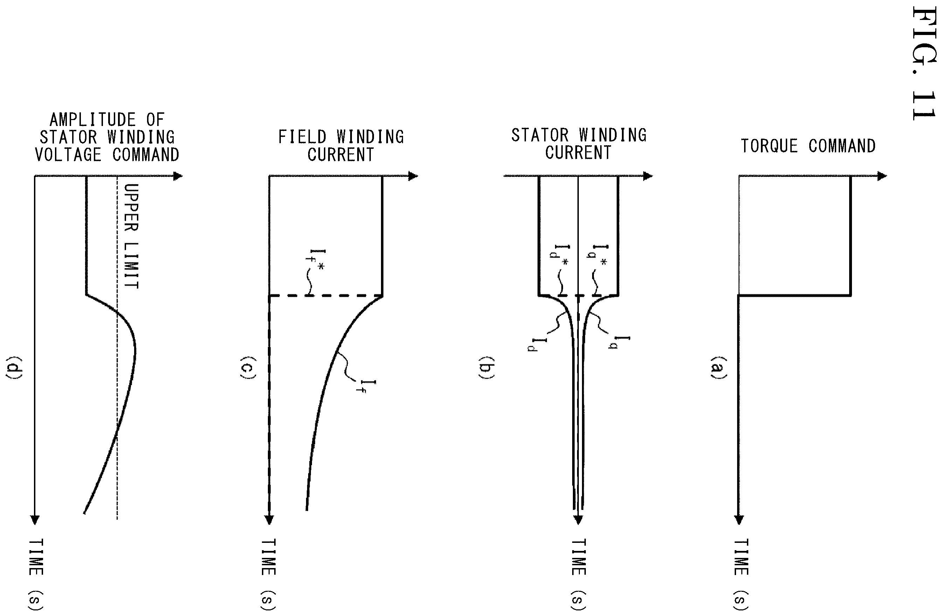

FIG. 11 shows the stator winding current, the field winding current, and the amplitude of the stator winding voltage command, in a case where the torque command is changed from the prescribed value to 0, in the control device for the rotary machine in the comparative example in which the stator winding current command correction unit is not provided. In FIG. 11, FIG. 11(a) shows the torque command, FIG. 11(b) shows the stator winding current, FIG. 11(c) shows the field winding current, and FIG. 11(d) shows the amplitude of the stator winding voltage command.

As shown in FIG. 11(b), in the control device for the rotary machine in the comparative example in which the stator winding current command correction unit is not provided, since the torque command, the rotational speed command, the uncorrected DC voltage, and the field winding current command I_{f}* (in this comparative example, the field winding current command has a waveform that does not simulate field current response) are inputted to the stator winding current command generation unit 812, the stator winding current commands I_{d}*, I_{q}* sharply change following the waveform of the torque command. Similarly, as shown in FIG. 11(c), in the control device for the rotary machine in the comparative example in which the stator winding current command correction unit is not provided, the field winding current command I_{f}* also sharply changes following the waveform of the torque command. Since current response of the field winding is slower than current response of the stator winding, the field winding current I_{f} actually flowing through the field winding cannot follow I_{f}*. Therefore, the stator winding currents I_{d}, I_{q} actually flowing through the stator windings cannot follow I_{d}*, I_{q}*. As a result, as shown in FIG. 11(d), the amplitude of the stator winding voltage command exceeds the upper limit value of voltage that the stator winding power conversion unit can output. When the amplitude of the stator winding voltage command exceeds the upper limit value, windup of integral control in the control device, unexpected magnetic flux interference between the stator winding and the field winding in the rotary machine, and the like are caused. As a result, current control for the rotary machine might become unstable.

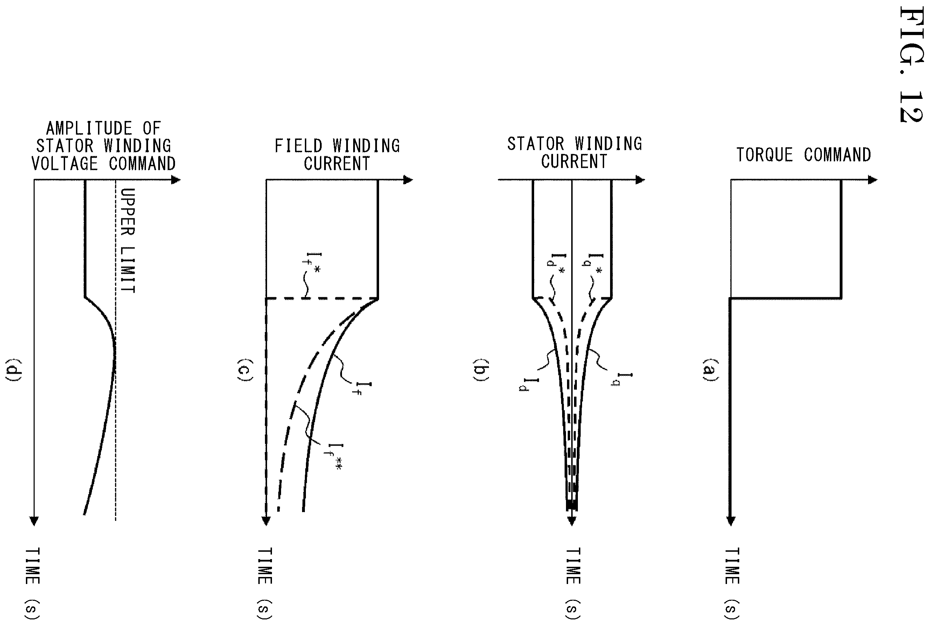

FIG. 12 shows the stator winding current, the field winding current, and the amplitude of the stator winding voltage command, in a case where the torque command is changed from the prescribed value to 0, in the control device for the rotary machine in the present embodiment in which the stator winding current command correction unit is provided. Here, the characteristics shown in FIG. 12 are characteristics under the condition that only the field winding current command selection unit of the stator winding current command correction unit operates and the DC voltage correction unit does not operate. In FIG. 12, FIG. 12(a) shows the torque command, FIG. 12(b) shows the stator winding current, FIG. 12(c) shows the field winding current, and FIG. 12(d) shows the amplitude of the stator winding voltage command.

As shown in FIG. 12(c), the field winding current command I_{f}* sharply changes following the waveform of the torque command. At this time, separation between the field winding current command I_{f}* or I_{f}** and the field winding current I_{f} increases, and the stator winding voltage margin decreases. Therefore, the stator winding current commands I_{d}*, I_{q}* are generated on the basis of the field winding current I_{f}. Therefore, as shown in FIG. 12(b), the stator winding current commands I_{d}*, I_{q}* mildly change without sharply changing following the waveform of the torque command. The stator winding currents I_{d}, I_{q} change following the stator winding current commands I_{d}*, I_{q}*. As a result, as shown in FIG. 12(d), the amplitude of the stator winding voltage command is less likely to exceed the upper limit value of voltage that the stator winding power conversion unit can output.

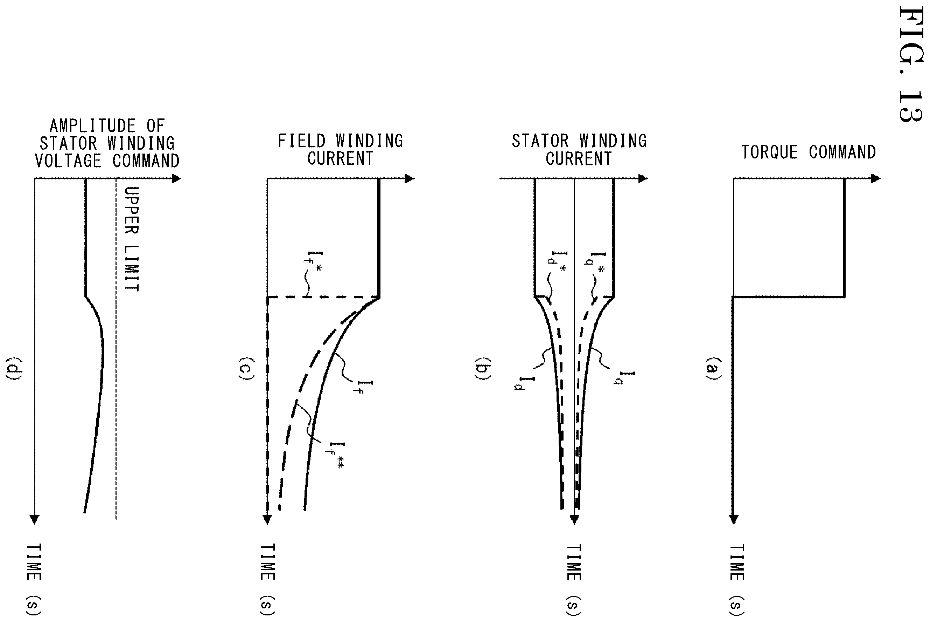

FIG. 13 shows the stator winding current, the field winding current, and the amplitude of the stator winding voltage command, in a case where the torque command is changed from the prescribed value to 0, in the control device for the rotary machine in the present embodiment in which the stator winding current command correction unit is provided. Here, the characteristics shown in FIG. 13 are characteristics in a case where both of the field winding current command selection unit and the DC voltage correction unit of the stator winding current command correction unit operate. In FIG. 13, FIG. 13(a) shows the torque command, FIG. 13(b) shows the stator winding current, FIG. 13(c) shows the field winding current, and FIG. 13(d) shows the amplitude of the stator winding voltage command.

As shown in FIG. 13(c), the field winding current command I_{f}* sharply changes following the waveform of the torque command. At this time, separation between the field winding current command I_{f}* or I_{f}** and the field winding current I_{f} increases, and the stator winding voltage margin increases. Therefore, the stator winding current commands I_{d}*, I_{q}* are generated on the basis of the field winding current I_{f}. Thus, as shown in FIG. 13(b), the stator winding current commands I_{d}*, I_{q}* mildly change without sharply changing following the waveform of the torque command. In addition, since the DC voltage correction unit operates, the waveform of I_{d}* changes more mildly than in a case where the DC voltage correction unit shown in FIG. 12 does not operate. Thus, flux weakening control is more exerted than in the operation shown in FIG. 12. As a result, change in the amplitude of the stator winding voltage command shown in FIG. 13(d) becomes even smaller than change in the amplitude of the stator winding voltage command shown in FIG. 12(d), so that the amplitude of the stator winding voltage command is even less likely to exceed the upper limit value.

Although the disclosure is described above in terms of an exemplary embodiment, it should be understood that the various features, aspects, and functionality described in the embodiment are not limited in their applicability to the particular embodiment with which they are described, but instead can be applied alone or in various combinations to the embodiment of the disclosure.

It is therefore understood that numerous modifications which have not been exemplified can be devised without departing from the scope of the present disclosure. For example, at least one of the constituent components may be modified, added, or eliminated.

### DESCRIPTION OF THE REFERENCE CHARACTERS

1 control device
2 rotary machine
3 DC power supply
4 stator winding power conversion unit
5 field winding power conversion unit
6 stator winding current detection unit
7 field winding current detection unit
8 processor
9 storage device
81 current command generation unit
82 stator winding voltage command unit
83 stator winding switching command generation unit
84 field winding voltage command unit
85 field winding switching command generation unit
810 field winding current command generation unit
811 stator winding current command correction unit
812 stator winding current command generation unit
8110 field winding current response simulation unit
8111 field winding current separation determination unit
8112 field winding current command selection unit
8113 DC voltage correction unit
8114 stator winding voltage margin calculation unit

## Claims

1. A control device for a rotary machine including a rotor having a field winding and a stator having a stator winding, the control device comprising:
a current command generation unit which generates a field winding current command for current flowing through the field winding and a stator winding current command for current flowing through the stator, on the basis of an operation command inputted from outside;
a field winding voltage command unit which generates a field winding voltage command for voltage to be applied to the field winding, on the basis of the field winding current command;
a stator winding voltage command unit which generates a stator winding voltage command for voltage to be applied to the stator winding, on the basis of the stator winding current command;
a field winding power conversion unit which applies voltage to the field winding on the basis of the field winding voltage command; and
a stator winding power conversion unit which applies voltage to the stator winding on the basis of the stator winding voltage command, wherein
the current command generation unit includes
a field winding current command generation unit which generates the field winding current command on the basis of the operation command and DC voltage inputted from outside,
a stator winding current command correction unit which generates a state variable for correcting the stator winding current command, on the basis of the current flowing through the field winding and the field winding current command generated by the field winding current command generation unit, and
a stator winding current command generation unit which generates the stator winding current command on the basis of the operation command and the state variable generated by the stator winding current command correction unit.

2. The control device for the rotary machine according to claim 1, wherein
the state variable is at least one of information about the current flowing through the field winding and information about the DC voltage.

3. The control device for the rotary machine according to claim 2, wherein
the information about the current flowing through the field winding is at least one of a value of the current flowing through the field winding, the field winding current command, and field winding response current simulating response of the current flowing through the field winding, or information obtained by combining at least two of these.

4. The control device for the rotary machine according to any one of claims 1 to 3, wherein
the stator winding current command correction unit includes a field winding current command selection unit, and
the field winding current command selection unit selects one of a value of the current flowing through the field winding, the field winding current command, and field winding response current simulating response of the current flowing through the field winding, or a value obtained by combining two or more of these.

5. The control device for the rotary machine according to claim 4, wherein
the stator winding current command correction unit includes a field winding current separation determination unit, and
the field winding current separation determination unit calculates separation between the value of the current flowing through the field winding and the field winding current command or the field winding response current simulating the response of the current of the field winding.

6. The control device for the rotary machine according to claim 5, wherein
the stator winding current command correction unit includes a stator winding voltage margin calculation unit, and
the stator winding voltage margin calculation unit calculates a stator winding voltage margin which is a difference between an amplitude of the stator winding voltage command and an upper limit of a voltage amplitude that the stator winding power conversion unit can output, on the basis of one or more of the value of the current flowing through the field winding, the field winding current command, the field winding response current simulating the response of the current of the field winding, the operation command, and the DC voltage.

7. The control device for the rotary machine according to claim 6, wherein
the field winding current command selection unit selects one of the value of the current flowing through the field winding, the field winding current command, and the field winding response current simulating the response of the current flowing through the field winding, or the value obtained by combining two or more of these, on the basis of at least one of a magnitude of the separation of the field winding current separation determination unit and the stator winding voltage margin of the stator winding voltage margin calculation unit.

8. The control device for the rotary machine according to claim 7, wherein
the stator winding current command correction unit includes a DC voltage correction unit, and
the DC voltage correction unit corrects a value of the inputted DC voltage on the basis of at least one of the magnitude of the separation determined by the field winding current separation determination unit and the stator winding voltage margin calculated by the stator winding voltage margin calculation unit.

9. The control device for the rotary machine according to any one of claims 1 to 8, wherein
the stator winding current command correction unit operates in a case where a rotational speed of the rotary machine is not smaller than 20% of a maximum rotational speed.
